# FASCICULE DE BREVET EUROPEEN

(11) **EP 2 623 538 B1**
(45) Date de publication et mention de la délivrance du brevet: **14.10.2015**
(21) Numéro de dépôt: 13153617.9
(22) Date de dépôt: 01.02.2013
(51) Int. Cl.: C08G 63/48, C08L 67/08, C09D 167/08, C09D 5/02

(54) **Résine alkyde biosourcée et procédé de fabrication d'une telle résine alkyde**
Alkydharz aus erneuerbaren Rohstoffen und Herstellungsverfahren eines solchen Alkydharzes
Biosourced alkyd resin and method for manufacturing such an alkyd resin

(30) Priorité: 02.02.2012 FR 1250987
(43) Date de publication de la demande: 07.08.2013
(73) Titulaire: A ET A - Mader, 59800 Lille (FR); Roquette Frères, 62136 Lestrem (FR)
(72) Inventeur: Roussel, Joel, 84310 MORIERE-LES-AVIGNON (FR); Buffe, Clothilde, 59160 LOMME (FR); Crowther-Alwyn, Laura, 59280 ARMENTIERES (FR); Verraes, Arnaud, 59136 WAVRIN (FR)
(74) Mandataire: Balesta, Pierre

(56) Documents cités:
- EP-A2- 0 741 175
- WO-A1-2012/005645
- US-A1- 2011 281 972
- VAN HAVEREN J ET AL: "Resins and additives for powder coatings and alkyd paints, based on renewable resources", JOURNAL OF COATINGS TECHNOLOGY RESEARCH, SPRINGER NEW YORK LLC, US, GB, vol. 4, no. 2, 1 juin 2007 (2007-06-01), pages 177-186, XP002539261, ISSN: 1945-9645, DOI: 10.1007/S11998-007-9020-5

## Description

La présente invention concerne de manière générale les résines alkydes issues au moins en partie de composants biosourcés ainsi que les procédés de fabrication de telles résines.

La présente invention se rapporte également à la formulation de telles résines sous forme d'émulsions aqueuses, compositions ou formulations de peinture.

Par résine alkyde, on désigne dans le présent texte, un polyester modifié avec des huiles et/ou des acides gras.

Par biosourcé, on désigne dans le présent texte, tout composant d'origine végétale ou animale.

Les résines alkydes conventionnelles sont formulées à l'aide de solvants organiques volatils d'origine fossile et nocifs pour l'homme et/ou l'environnement (tels que le white spirit, le xylène, le solvant naphta). Les résines alkydes sont en outre synthétisées à partir de matières premières d'origine fossile, c'est-à-dire issues de l'industrie pétrochimique ou carbochimique, en particulier à partir d'acides organiques d'origine pétrolière (notamment à base d'anhydride phtalique).

Des efforts ont été faits pour proposer des émulsions aqueuses de résines alkydes comprenant très peu ou pas de composés organiques volatils.

Il existe ainsi un besoin constant de réduire, voire de supprimer les composés nocifs pour l'homme et/ou l'environnement employés dans la synthèse de ces résines alkydes et dans les émulsions aqueuses comprenant de telles résines, notamment lorsqu'elles sont utilisées pour des formulations de peintures destinées au public, tout en satisfaisant le cahier des charges fixé, en particulier s'agissant du séchage rapide de la peinture ou encore de la dureté du film formé.

Par ailleurs, la mise en oeuvre des matières premières utilisées pour la synthèse de résines alkydes ou leur formulation contribue à augmenter l'effet de serre. Etant donnée la diminution des réserves pétrolières mondiales, la source de ces matières premières vient peu à peu à s'épuiser.

Les matières premières issues de la biomasse sont de source renouvelable et ont un impact réduit sur l'environnement. Elles ne nécessitent pas toutes les étapes de raffinage coûteuses en énergie des produits pétroliers. La production de CO₂ est réduite de sorte qu'elles contribuent moins au changement climatique.

Il apparaît donc nécessaire de disposer de procédés de synthèse non dépendants de matière première d'origine fossile, mais utilisant plutôt des matières premières d'origine renouvelable, et notamment biosourcées.

A cet effet, le document WO 2011/051612 propose une résine alkyde préparée au moins en partie à partir de composants biosourcés et la préparation en émulsion aqueuse d'une telle résine avec un agent émulsifiant d'origine naturelle ou fossile.

Les différentes formulations décrites mettent en oeuvre un ou deux polyacides, en particulier un dimère d'acide gras et/ou de l'acide adipique, un composant à base d'huile de tournesol, un seul polyol, en particulier le glycérol ou le sorbitol, et un catalyseur de polycondensation (Ca(OH)₂).

La demanderesse a pu observer que les résines alkydes décrites présentent pour certaines une viscosité élevée (la viscosité dynamique est comprise entre 10 et 50 poises à 80°C), pour d'autres une synthèse délicate. En effet, si l'on reproduit l'exemple 10 décrit dans WO 2011/051612, on observe la formation d'un dépôt lié à l'utilisation du couple acide succinique / glycérol, lequel dépôt est insoluble et infusible en quantité importante rendant la préparation d'une émulsion à partir de cette résine impossible. De manière générale, les propriétés finales obtenues dans les films de peinture réalisés avec ces résines ne satisfont pas aux exigences standards du marché des peintures décoratives (ces exigences sont notamment reprises en page 13 du présent texte au regard de la référence désignée sous le terme synolac 6865).

On connait également WO 2012/005645 ayant pour objet une résine alkyde qui est obtenue en soumettant une composition de base comprenant au moins un composant d'acide polycarboxylique ; au moins un composant polyalcool et au moins un acide monocarboxylique ou son triglycéride correspondant, à une ou plusieurs réactions d'estérification ou de trans-estérifications. Parmi les cinq exemples de réalisation décrits, la proportion la plus faible en acide furanique (FDCA) correspond à l'exemple 3 dans lequel la résine alkyde comprend plus de 14% en moles de FDCA.

On connait également US 2011/0281972 décrivant une composition pour l'obtention d'une résine polyester destinée à être appliquée par poudrage électrostatique. Dans les exemples de réalisation a) à h), décrits au tableau 1, il est employé des polyacides comprenant un cycle tel que l'acide téréphtalique ou isophtalique ou encore le CHDA. Les exemples a) à h) comprennent tous plus de 30% en moles d'un polyacide comprenant un cycle. De même, les exemples 1 et 2 illustrés au tableau 3 comprennent de l'acide isophtalique et téréphtalique pour plus de 40% en moles de résine polyester.

La présente invention cherche justement à limiter, voire supprimer, l'utilisation de polyacide(s) cycloalkyle(s) ou aromatique(s) dans l'obtention d'une résine alkyde tout en ayant des propriétés filmogènes, de dureté et de résistance à l'abrasion similaires, voire meilleures, que celles obtenues pour les résines alkydes à base d'acide téréphtalique ou d'acide isophtalique.

La présente invention a aussi pour objet une résine alkyde, au moins en partie biosourcée, voire totalement biosourcée, facile à émulsionner.

La présente invention a également pour objet une formulation de peinture à base d'une résine alkyde, au moins en partie biosourcée, ayant des propriétés de rapidité de séchage, de dureté du film formé, de résistance à l'abrasion humide, de stabilité rhéologique et physique, de résistance aux rayons ultra-violets et de capacité à adhérer à différents supports notamment le bois et le métal, comparables voire supérieures à celles obtenues pour une formulation de peinture à base d'une résine alkyde solvantée, par exemple du type oléoglycérophtalique.

La présente invention a ainsi pour objet selon un premier aspect une résine alkyde, au moins en partie biosourcée, comprenant :
- un composant polyacide, de préférence biosourcé, ou son anhydride acide, de préférence biosourcé;
- un premier composant polyol, de préférence biosourcé, ayant au moins deux groupes hydroxyles ;
- un deuxième composant polyol biosourcé ayant au moins un motif de 1,4 :3,6-dianhydrohexitol ;
- un composant à base d'huile biosourcée ou son acide gras correspondant biosourcé,
ladite résine comprenant moins de 10% en moles, par rapport au nombre total de moles des différents composants, de polyacide(s) aromatique(s), de polyacide(s) cycloalkyle(s) ou d'anhydride(s) acide(s) desdits polyacides.

La demanderesse a constaté de façon surprenante que la mise en oeuvre d'un deuxième composant polyol comprenant au moins un motif de 1,4 :3,6-dianhydrohexitol, en particulier de 1,4 :3,6-dianhydro-D-sorbitol (isosorbide), permet d'obtenir une résine alkyde ayant une viscosité modérée à température ambiante, permettant sa mise en oeuvre sous forme d'émulsion aqueuse.

Avantageusement, la résine alkyde selon l'invention ne comprend pas d'anhydride phtalique, et de préférence de manière générale pas de polyacide aromatique ou anhydride de polyacide aromatique.

Avantageusement, la résine alkyde selon l'invention comprend moins de 5% en moles de polyacide(s) aromatique(s), de polyacide(s) cycloalkyle(s) ou d'anhydride(s) acide(s) desdits polyacides. La résine alkyde selon l'invention est éventuellement exempte de polyacide aromatique, de polyacide cycloalkyle ou d'anhydride acide de ces derniers.

Avantageusement, un polyacide aromatique selon l'invention est un composé comprenant au moins deux groupes carboxyles et un cycle hydrocarboné aromatique, ledit cycle comprenant de 3 à 13 atomes, de préférence de 3 à 10 atomes et encore de préférence, de 3 à 6 atomes, en particulier de carbone et éventuellement un ou plusieurs hétéroatomes, en particulier choisi parmi O, S et N. Le cycle aromatique peut ainsi être un cycle benzène, furane, pyrrole, thiophène ou encore naphtalène,

Avantageusement, un polyacide cycloalkyle selon l'invention est un composé comprenant au moins deux groupes carboxyles et un cycle hydrocarboné saturé notamment comprenant de 3 à 10 atomes de carbone, de préférence de 3 à 6 atomes de carbone, tels que le cyclopropyle ou le cyclohexyle..

Avantageusement, le pourcentage en moles d'un composant donné dans la résine alkyde est défini par le rapport du nombre initial de moles de ce composé par rapport au nombre de moles totales des différents composés présents au départ pour l'obtention de la résine alkyde.

De préférence, le second composant polyol biosourcé ayant au moins un motif de 1,4 :3,6-dianhydrohexitol est le 1,4 :3,6-dianhydrohexitol seul.

De manière avantageuse, la résine alkyde selon l'invention est liquide ou apte à s'écouler à température ambiante [20°C ; 25°C].

De préférence, la résine alkyde selon l'invention présente une viscosité modérée, c'est-à-dire une viscosité dynamique inférieure à 2000 Poises à 20°C, de préférence supérieure à 20 Poises, encore de préférence la viscosité dynamique est comprise entre 20 Poises et 1000 Poises à 20 °C, et encore de préférence la viscosité dynamique est comprise entre 20 Poises et 300 Poises à 20°C. Les viscosités dynamiques sont mesurées selon la norme ISO 3219 :1993. Préférentiellement, la viscosité dynamique de la résine alkyde selon l'invention à 80°C est inférieure à 10 Poises.

Pour une résine alkyde de composition donnée, des viscosités dynamiques élevées indiquent des masses moléculaires moyennes élevées et ainsi corrélativement de bonnes propriétés mécaniques, notamment pour la formation d'un film de peinture suffisamment dur et résistant à l'abrasion. Néanmoins, une viscosité dynamique trop élevée empêche la dispersion stable dans une phase solvant de la résine alkyde, en particulier s'agissant de l'eau, et ceci au détriment de l'extrait sec (% en poids) de la résine alkyde que peut contenir l'émulsion.

De plus, il convient de noter qu'une formulation de peinture doit pouvoir habituellement être utilisée à température ambiante, généralement entre 20°C et 25°C.

Avantageusement, il a été observé que la résine alkyde présente une excellente résistance à l'abrasion humide (cf. essais réalisés ci-dessus).

Une explication non exhaustive serait que l'emploi de deuxième composant polyol permet d'améliorer la dureté du film polymère obtenue à l'issue de la mise en oeuvre de la résine alkyde.

De préférence, la résine alkyde selon l'invention comprend entre 20 % en moles et 70 % en moles d'acide gras biosourcé, de préférence entre 20 % en moles et 50 % en moles.

Rappelons qu'un acide gras (RCOOH) est un acide carboxylique, saturé ou non, généralement obtenu par hydrolyse des corps gras (notamment les esters d'acides carboxyliques à longue chaine) et du propane-1,2,3-triol (glycérol), dans lequel R est une chaîne alkyle saturée (CₙH₂ₙ₊₁) ou une chaîne alcényle insaturée (CₙH₂ₙ₋₁).

De préférence, les acides gras selon l'invention peuvent être introduits en tant que tel ou sous forme de monoglycéride(s) raffiné(s) ou de mélange(s) raffiné(s) de mono et/ou di et/ou tri glycérides, autrement dit sous forme d'huile(s) végétale(s) et/ou animales.

L'hydrolyse d'une mole de mono, di ou triglycéride en milieu basique permet la formation respectivement d'une mole, de deux moles ou de trois moles d'acide gras biosourcé selon l'invention.

De préférence, la résine alkyde selon l'invention comprend au moins 5 % en moles de motifs de 1,4 :3,6-dianhydrohexitol, de préférence au moins 10% en moles, avantageusement au plus 50% en moles, encore de préférence au plus 40%, tout préférentiellement au plus 25 % en moles de motifs de 1,4 :3,6-dianhydrohexitol.

De préférence, la résine alkyde selon l'invention comprend au moins 5 % en moles, de préférence au moins 10% en moles, et encore de préférence au plus 25% en moles du premier composant polyol.

Dans une sous-variante, la résine alkyde selon l'invention comprend moins de 10% en moles, de préférence moins de 5% en moles, de polyol aliphatique, voire en est exempte.

De préférence, la résine alkyde selon l'invention comprend au moins 10 % en moles, de préférence au moins 20% en moles, avantageusement au plus 50% en moles et encore de préférence au plus 40 % en moles du composant polyacide.

On désigne dans le présent texte par composant polyacide, tout composant comprenant au moins deux groupes carboxyles (-COOH), avantageusement 2 ou 3 groupes carboxyles (-COOH), en particulier 2 groupes carboxyles (-COOH).

On désigne dans le présent texte par composant polyol, tout composant comprenant au moins deux groupes hydroxyles (-OH).

De préférence, le premier composant polyol comprend au moins trois groupes hydroxyles.

Il convient de noter qu'un même composant polyacide ou polyol peut être obtenu à partir de composants biosourcés mais peut être également obtenu à partir de composants d'origine fossile. Tel est le cas par exemple de l'acide adipique ou du pentaérythritol.

Une méthode permettant d'identifier si un polyacide, un polyol ou un acide gras est biosourcé consiste à identifier si ce composant comprend du carbone ¹⁴C, synonyme de présence de carbone renouvelable. En effet, un composant biosourcé est un composant dans lequel le carbone provient de CO₂ fixé récemment (à l'échelle humaine) par photosynthèse à partir de l'atmosphère. Sur terre, ce CO₂ est capté et fixé par les plantes. En mer, ce CO₂ est capté et fixé par des bactéries ou du plancton procédant à une photosynthèse. La teneur en carbone ¹⁴C d'un composant biosourcé est déterminée en application des normes ASTM D 6866 (ASTM D 6866-06) et ASTM D 7026 (ASTM D 7026-04), préférentiellement selon la méthode de mesure de spectrométrie de masse décrite dans la norme ASTM D6866-06 (" accelerator mass spectroscopy ").

On désigne, dans le cadre de la présente invention, par un composant biosourcé, dont le composant polyacide biosourcé, le premier composant polyol biosourcé, le second composant polyol comprenant au moins un motif de 1,4 :3,6-dianhydrohexitol, et le composant à base d'huile biosourcée ou son acide gras correspondant biosourcé, tout composé comprenant au moins 1% en poids de carbone renouvelable, avantageusement au moins 50%, préférentiellement au moins 90% de carbone renouvelable.

Cette définition s'applique également au diluant réactif biosourcé ou aux agents de la mise en émulsion de la résine alkyde cités ci-dessous.

Dans une variante, le composant polyacide ou son anhydride acide est saturé ou insaturé et comporte une chaîne hydrocarbonée ayant au minimum 2 atomes de carbone et au maximum 36 atomes de carbone.

Une chaine hydrocarbonée saturée est constituée par des atomes de carbone et d'hydrogène liés entre eux pour former des groupes dits méthylène -CH₂-.

De préférence, le ou les acides gras comportent entre 12 à 24 atomes de carbone.

Dans une variante, ledit au moins un motif de 1,4 :3,6-dianhydrohexitol est choisi, seul ou en combinaison, parmi : le 1,4 :3,6-dianhydro-D-sorbitol (isosorbide), le 1,4:3,6-dianhydro-D-mannitol (isomannide), et le 1,4 :3,6-dianhydro-L-iditol (isoidide), de préférence le 1,4 :3,6-dianhydro-D-sorbitol (isosorbide).

Dans une variante, les motifs de 1,4 :3,6-dianhydrohexitol du deuxième composant polyol biosourcé, de préférence le 1,4 :3,6-dianhydro-D-sorbitol (isosorbide) représente au moins 5 % en moles de ladite résine alkyde.

Les trois différents isomères (isosorbide, isomannide, isoidide) couverts par le 1,4 :3,6-dianhydrohexitol seront désignés ensemble sous le terme isohexide dans la suite du présent texte.

De préférence, le second composant polyol est un monomère d'isohexide. De préférence, le monomère d'isohexide est caractérisé par une pureté d'au moins 97%, de préférence d'au moins 99%. La pureté des constituants de la résine peut être mesurée par les techniques connues de chromatographie liquide haute performance (HPLC).

Dans une variante, le composant polyacide est choisi, seul ou en combinaison, parmi : l'acide succinique (C₄H₆O₄) ; l'acide adipique (C₆H₁₀O₄) ; l'acide itaconique (C₅H₆O₄), l'acide azélaique, l'acide sébacique, l'acide tartrique, l'acide citrique, l'acide malique, leurs anhydrides acides, des oligomères d'acide gras naturels, et/ou leurs mélanges ; et notamment un dimère ou un trimère d'acide gras d'origine végétal et/ou animale.

Dans une variante, le composant polyacide ou son anhydride acide est choisi seul ou en combinaison parmi : l'acide adipique et/ou son anhydride acide, des oligomères d'acide gras d'origine végétale et/ou animale, en particulier un dimère d'acide gras d'origine végétal et/ou animale tel que le PRIPOL 1012 ou 1013 commercialisés par la société CRODA.

Les inventeurs ont observé de meilleurs résultats avec cette sélection d'acides en termes de viscosité dynamique, avantageusement comprise entre 20 poises (ou 2 000 mPa.s) et 2000 poises (ou 200 000 mPa.s), de préférence comprise entre 20 Poises (ou 2 000 mPa.s) et 300 Poises (ou 30 000 mPa.s) à 20°C selon la norme ISO 3219 :1993 ainsi qu'une facilité de mise en émulsion et de meilleures propriétés mécaniques obtenues pour le film polymère séché.

Dans une variante, le premier composant polyol comprend au plus six groupes hydroxyles. Préférentiellement, le premier composant polyol présente un nombre de fonctions hydroxyles supérieur à 2.

Les inventeurs ont remarqué qu'au-delà de six groupes hydroxyles, le milieu réactionnel formé par les composants de départ lors du procédé de fabrication de la résine alkyde selon l'invention (voir ci-dessous), avait tendance à gélifier et donc empêcher la polycondensation correcte des composants de départ.

Dans une variante, le premier composant polyol est choisi parmi les polyols suivants, seul ou en combinaison : le pentaérythritol (C₅H₁₂O₄) ; le glycérol (C₃H₈O₃) ; le sorbitol (C₆H₁₄O₆) ; l'erythritol (C₄H₁₀O₄). Avantageusement il s'agit du pentaérythritol (C₅H₁₂O₄), et du glycérol (C₃H₈O₃) et encore de préférence le pentaérythritol (C₅H₁₂O₄).

Dans une variante, le composant à base d'huile biosourcée ou son acide gras correspondant est choisi parmi les huiles végétales et/ou animales siccatives et/ou semi siccatives et les acides gras entrant dans la composition desdites huiles végétales et/ou animales.

On comprend par siccativité d'une huile, son aptitude à sécher en présence de l'oxygène de l'air, cette aptitude est croissante avec l'augmentation du nombre d'insaturations (ou de doubles liaisons) présentes dans la structure de l'huile. On parle ainsi d'huile siccative si l'indice d'iode est supérieur à 150, semi-siccative si l'indice d'iode est compris entre 110 et 150 inclus, et non siccative si l'indice d'iode est inférieur à 110. L'indice d'iode li correspond à la masse d'halogène exprimée en grammes et fixé sur les doubles liaisons présentes dans la structure de l'huile.

Dans une variante, les huiles végétales et leurs acides gras correspondants sont choisis parmi les huiles ou acides gras de Soja, les huiles ou acides gras de Tournesol, les huiles ou acides gras de Lin, les huiles ou acides gras de bois de Chine, les huiles ou acides gras de Ricin, l'acide gras de Tall-Oil et/ou leurs mélanges, de préférence parmi les acides gras précités, de façon avantageuse l'huile de soja ou de lin ou les acides gras de soja ou de lin encore plus avantageusement les acides gras de l'huile de soja ou de lin, et encore plus avantageusement les acides gras de l'huile de soja, en particulier ceux ayant une teneur élevée en acide oléique (avantageusement entre 24 et 34% en poids) tel que l'acide gras de soja commercialisé par la société OLEON sous la référence NOURACID® SZ35.

Avantageusement, les acides gras de l'huile de soja comprennent des acides choisis parmi l'acide oléique (avantageusement entre 20% et 30% en poids), l'acide linoléique (avantageusement entre 40% et 70% en poids), l'acide α-linolénique (avantageusement entre 2% et 13%), l'acide palmitique (avantageusement entre 7% et 18%), l'acide stéarique (de préférence entre 1% et 8%) et les acides gras saturés (avantageusement entre 0,1% et 2% en poids).

Avantageusement, les acides gras de l'huile de lin comprennent des acides choisis parmi l'acide α-linolénique (avantageusement entre 45 et 70% en poids), l'acide linoléique (avantageusement entre 12% et 24 %), l'acide oléique (avantageusement entre 10% et 21% en poids), et les acides gras saturés (avantageusement entre 6% et 18%).

Dans une variante, la résine alkyde présente un indice d'acide inférieur à 20 mg KOH/g, de préférence inférieur ou égal à 15 mg KOH/g.

De préférence, l'indice d'acide est supérieur à 5 mg KOH/g. En particulier il est compris entre 6 et 13 mg KOH/g.

Par indice d'acide, on comprend, au sens de la présente invention, un indice caractérisant l'acidité de la résine alkyde. Cet indice correspond ainsi au nombre de milligrammes d'hydroxyde de potassium nécessaires pour neutraliser un gramme d'échantillon de résine alkyde.

La diminution de l'indice d'acide au cours de la réaction de polycondensation permet également de contrôler l'avancement de la réaction d'estérification et donc la longueur des chaines macromoléculaires de ladite résine alkyde formée.

Dans une variante, la résine alkyde présente une longueur en huile comprise entre 25 et 75% inclus, de préférence entre 40% et 65% inclus, en particulier entre 40 et 60%.

Par longueur en huile, on comprend au sens de la présente invention, la teneur en huile ou en acide gras, c'est à dire la masse en acide gras par rapport à la masse de tous les constituants de la résine alkyde après élimination de l'eau d'estérification.

La présente invention a pour objet, selon un deuxième aspect, une composition comprenant une résine alkyde selon l'une des variantes de réalisation décrites ci-dessus, et un diluant réactif, de préférence biosourcé.

La présente invention a pour objet, selon un troisième aspect, une émulsion aqueuse d'une résine alkyde comprenant de 25% à 60%, avantageusement 30% à 50%, en poids de résine alkyde selon l'une des variantes de réalisation décrites ci-dessus, ou de la composition décrite ci-dessus, et au moins un agent émulsifiant, de préférence d'origine végétale ou animale, de préférence en quantité allant de 0,1% en poids à 1% en poids de l'émulsion aqueuse, avantageusement de 0,3 à 0,7% .

Les valeurs (%) en poids indiquées ci-après sont données par rapport au poids total de l'émulsion aqueuse.

Dans une variante, l'agent émulsifiant peut être ionique ou non ionique, et est de préférence choisi seul ou en combinaison parmi : les sulfonates d'alkyle, les sulfonates d'aryle, les stéarates, la lécithine, les monoesters de glycérol, les monoesters d'acide gras, les esters de pentaérythritol, les esters de sorbitan, tels que le mono oléate de sorbitan ou le monolaurate de sorbitan, avantageusement il s'agit d'un ester de sorbitan, en particulier le monolaurate de sorbitan.

Dans une variante, l'émulsion aqueuse comprend au moins un agent anti-mousse, de préférence en quantité allant de 0,1% à 2% en poids de ladite émulsion aqueuse, en particulier de 0,5 à 1,5% en poids.

Dans une sous-variante, l'agent anti-mousse est choisi seul ou en combinaison parmi : les polysiloxanes, les esters d'acide gras et de polyoxyéthylène, des esters d'acide gras et de polyoxypropylène, les esters de sorbitan et de polyoxyéthylène tels que le monolaurate de sorbitan polyoxyéthyléné, avantageusement il s'agit d'un ester de sorbitan et de polyoxyéthylène.

Dans une variante, l'émulsion aqueuse comprend au moins un agent de stabilisation, de préférence en proportion allant de 0,1% à 8% en poids de ladite émulsion, avantageusement de 1% à 5% en poids.

Dans une sous-variante, l'agent de stabilisation est choisi seul ou en combinaison parmi : les amidons modifiés, les gommes xanthane, les gommes guar, de façon avantageuse il s'agit des amidons modifiés tel que le TACKIDEX® 110UY.

Dans une variante, l'émulsion aqueuse comprend au moins un agent polyfonctionnel ayant une fonction d'agent anti-mousse et/ou d'agent émulsifiant et/ou d'agent de stabilisation, de préférence en quantité allant de 0,5% à 8% en poids de ladite émulsion.

Dans une sous-variante, l'agent polyfonctionnel est choisi seul ou en combinaison parmi : les β-cyclodextrines, la gomme arabique, des protéines végétales et animales, notamment la caséine et/ou la gélatine.

Les résines alkydes peuvent être mises en émulsion avec l'eau pour former une émulsion huile dans eau.

Généralement, l'émulsion comprend de 40% à 75% en masse d'eau et de 25% à 60% en masse de résine alkyde.

Pour former cette émulsion, on peut mélanger la résine alkyde avec de l'eau et les différents agents précités pour former une émulsion. Il existe plusieurs appareils capables de réaliser une émulsion ; depuis l'agitateur jusqu'à l'homogénéisateur haute pression en passant par le moulin colloïdal et le turbo émulsionneur.

L'invention a donc également pour objet, selon un quatrième aspect, un procédé de fabrication de l'émulsion selon l'invention comprenant une étape de mélange d'une phase huile comprenant la résine alkyde selon l'invention et d'une phase aqueuse.

On peut réaliser un procédé dans lequel on passe par une émulsion eau dans huile tel que décrit dans la demande WO 2011/051612. La résine alkyde est alors chauffée puis est ensuite dispersée dans l'eau afin de former une émulsion de type eau dans huile (E/H). Cette émulsion E/H va s'inverser par rajout d'eau pour former une émulsion de type huile dans eau (H/E).

Alternativement, on peut réaliser un procédé de fabrication de l'émulsion par une étape de mise en émulsion directe de la phase huile dans la phase eau. Ce procédé est rendu possible par l'excellent comportement rhéologique de la résine alkyde selon l'invention.

Plus particulièrement, on peut fabriquer directement une émulsion huile dans eau (H/E) par la mise en oeuvre des étapes suivantes :
- une première étape au cours de laquelle, ladite résine alkyde est chauffée à une température supérieure ou égale à 40 °C, de préférence inférieure ou égale à 90°C pour former un mélange A, sous agitation, notamment à l'aide d'un dispositif de mélange ayant une pâle d'agitation tournant à une vitesse de rotation comprise entre 2 000 tours/min et 8 000 tours/min, éventuellement avec un agent émulsifiant ;
- Une seconde étape au cours de laquelle, un agent stabilisant est mélangé avec de l'eau, et éventuellement avec un agent anti-mousse, en chauffant à une température supérieure ou égale à 40°C, de préférence inférieure ou égale à 90°C pour former un mélange B ;
- Une troisième étape au-cours de laquelle on incorpore dans ledit mélange B, sous forte agitation, notamment à l'aide d'un dispositif comportant une pâle d'agitation tournant entre 5 000 tr/min et 8 000 tr/min, ledit mélange A, de préférence la température des mélanges A et B est inférieure ou égale à 60 °C, pendant au moins une minute pour l'obtention de l'émulsion de ladite résine alkyde.

Les émulsions ainsi formées présentent préférentiellement une viscosité allant de 1000 cP (ou 100 000 mPa.s) à 2000 centipoises (ou 200 000 mPa.s) à 20 °C, mesurée selon la norme ISO 3219 : 1993.

La présente invention a pour objet, selon un cinquième aspect, une formulation de peinture comprenant une composition décrite ci-dessus ou une émulsion aqueuse selon l'une des variantes de réalisation décrites ci-dessus.

La formulation de peinture peut comprendre également -de manière connue- des agents supplémentaires, notamment un ou plusieurs pigments, tels que des pigments naturels (biosourcés), : le dioxyde de titane, les oxydes de fer, le noir de carbone, le jaune de gaude, le bleu de pastel et le rouge de garance ; ou encore des pigments de synthèse issus de source fossile : le bleu et le vert de phtalocyanine, le jaune azoïque et le rouge de quinachridone.

La formulation de peinture peut comprendre également des charges, tels que les carbonates de calcium, le talc ou la silice, la cire d'abeille ou la cire de carnauba.

La formulation de peinture de l'invention contient classiquement un agent siccatif ou semi-siccatif.

Il est possible d'obtenir la formulation de peinture de l'invention par mélange de l'émulsion aqueuse avec les agents supplémentaires précédemment cités et éventuellement de l'eau.

Les quantités des charges et/ou pigments sont déterminées en fonction des propriétés désirées pour la dite formulation.

La présente invention a pour objet, selon un sixième aspect, un procédé de préparation d'une résine alkyde, telle que celle décrite selon l'une des variantes de réalisation citées ci-dessus, comprenant une étape de polycondensation de composants de départ formant un milieu réactionnel comprenant au moins un composant polyacide, de préférence biosourcé, ou son anhydride acide, de préférence biosourcé, un premier composant polyol, de préférence biosourcé, ayant au moins deux groupes hydroxyles, un deuxième composant polyol comprenant au moins un motif de 1,4 :3,6-dianhydrohexitol, un composant à base d'huile biosourcée ou son acide gras correspondant biosourcé, lesdits composants de départ sont mélangés dynamiquement en continu à une température comprise entre 180°C et 240°C jusqu'à formation de la résine alkyde.

Il est avantageux que pendant l'étape de polycondensation des composants de départ, la fonctionnalité effective du milieu réactionnel soit contrôlée et reste préférentiellement inférieure à 2 afin d'éviter un risque de gélification dudit milieu.

Par fonctionnalité effective d'un composant, on comprend, au sens de la présente invention, le nombre de groupes réactifs présents par molécule de ce composé (en particulier le nombre de groupes hydroxyles et/ou carboxyles).

Par fonctionnalité effective d'une résine alkyde, on comprend, au sens de la présente invention, la fonctionnalité effective moyenne du mélange réactionnel formé par les composants de départ : F = nombre total de groupes fonctionnels utilisés / nombre total de molécules.

Les proportions des différents composants de départ correspondent à celles indiquées ci-dessus pour la résine alkyde en page 3 et suivantes.

Dans une variante, l'étape de polycondensation est effectuée sans catalyseur de la réaction d'estérification. Cette disposition évite l'emploi d'un catalyseur et notamment son recyclage.

Néanmoins, il est habituel pour l'homme du métier d'utiliser un catalyseur de polycondensation tel que l'hydroxyde de calcium [Ca(OH)₂] ou l'hydroxyde de lithium [Li(OH)], afin d'accélérer la réaction de polycondensation.

Dans une variante, l'étape de polycondensation est réalisée en mode azéotropique, avec un solvant, notamment le xylène, pour créer l'azéotropie, ou en mode fusion sans solvant.

Le mode azéotropique est principalement utilisé pour la synthèse de résines alkydes. Il est basé sur la formation de l'azéotrope eau-solvant, notamment eau-xylène. Dès que les molécules d'eau se forment, elles vont former un azéotrope avec le solvant, notamment le xylène, qui sera emporté dans le réfrigérant. Puis les vapeurs se condensent dans le réfrigérant. On peut récupérer l'eau en bas du montage, celle-ci étant plus dense que le solvant, notamment le xylène.

Le solvant qui a servi pour créer l'azéotropie est éliminé en fin de synthèse par une opération de distillation, c'est-à-dire l'évaporation du solvant par le vide.

Le mode fusion peut être également utilisé même si ce montage est préférentiellement utilisé pour la synthèse des résines polyesters (in)saturés.

De préférence, une colonne à garnissage est intégrée entre le ballon et le Dean Stark. Dans la colonne, les glycols s'évaporent en même temps que l'eau mais ils se recondensent plus vite et retombent dans le ballon car leur température d'ébullition est plus haute que celle de l'eau. L'eau, quant à elle, se recondense et retombe dans le Dean Stark. Elle est ainsi évacuée du ballon.

Dans une variante, la température du milieu réactionnel lors de l'étape de polycondensation est élevée progressivement jusqu'à au moins 180°C sous un flux de gaz inerte chimiquement, en particulier l'azote.

Dans une variante, la température du milieu réactionnel lors de l'étape de polycondensation est maintenue pendant au moins deux heures entre 180°C et 240°C jusqu'atteindre un indice d'acide inférieur à 20 mg KOH/g de résine alkyde.

Dans une variante, à l'issue de l'étape de polycondensation, le solvant est éliminé, notamment par distillation sous-vide, jusqu'à ce que la résine alkyde formée présente un extrait sec au moins égal à 97%, de préférence supérieur ou égal à 99% en masse.

La présente invention sera mieux comprise à lecture des exemples de réalisation suivants, cités à titre non limitatif.

Les composants utilisés préférentiellement pour la synthèse des résines alkyde sont :
- Le premier composant polyol préféré comprenant au moins deux groupes hydroxyles est le pentaérythritol, commercialisé par la société PERSTORP, sous la référence VOXTAR M100, et caractérisé par un indice d'hydroxyde de potassium compris entre 1625-1650 mg KOH/gramme et une pureté de 98,0% minimum. Ce grade est exclusivement d'origine végétale. C'est un composé polyol comportant une fonctionnalité égale à 4. Il se présente sous la forme d'un solide blanc.
- Le second composant polyol comprenant au moins un motif d'isohexide utilisé est l'isosorbide, commercialisé par la société ROQUETTE sous la référence POLYSORB® P celui-ci étant caractérisé par une pureté de 99,5% minimum. L'isosorbide est un composé hétérocyclique obtenu à partir de la double réaction de déshydratation du sorbitol, lui-même issu de la réaction d'hydrogénation du glucose. L'isosorbide est un diol issu des agro-ressources, non toxique, biodégradable et stable thermiquement. Il se présente sous la forme d'un solide blanc, hygroscopique.

Les composants polyacides utilisés sont :
- les PRIPOL 1012 & 1013, lesquels sont commercialisés par la société CRODA. Il s'agit de dimères d'acide gras naturel caractérisés par des % élevés en dimères (96% minimum). Ils se présentent sous la forme d'un liquide épais.
- L'acide adipique est commercialisé par la société BASF. Il se présente sous la forme d'un solide blanc, et se caractérise par une pureté de 99,8% minimum.

Le composant d'acide gras utilisé est l'acide gras de Soja commercialisé par la société OLEON sous la référence NOURACID® SZ35. Il se présente sous la forme d'un liquide épais. Il est caractérisé par une teneur en acide oléïque (acide gras mono-insaturé C18 :1) comprise entre 24% et 34%.

### I- Partie expérimentale

### 1- Exemple 1 :

Dans un réacteur de 0,5 litres équipé d'un agitateur mécanique, d'une sonde de température, d'une arrivée d'azote, d'un décanteur surmonté d'un réfrigérant et d'une prise d'échantillon, on introduit à température ambiante :
- 161,54 g d'acide gras de soja ;
- 21,08 g d'isosorbide ;
- 164,18 g de PRIPOL 1012 ;
- 39,24 g de pentaérythritol ;
- 13,96 g de xylène.

La température du milieu réactionnel est ensuite élevée progressivement jusqu'à 220°C sous flux d'azote. Cette température est maintenue pendant 6 heures jusqu'à atteindre un indice d'acide inférieur à 20 mg KOH/gramme de résine. En fin de réaction, le xylène est ensuite éliminé par distillation sous vide jusqu'à atteindre un extrait sec supérieur ou égal à 99%. En fin de réaction, nous obtenons une résine alkyde se présentant sous la forme d'un liquide visqueux.

Les caractéristiques de la résine alkyde non diluée obtenue sont :
- Un indice d'acide de 9,5 mg KOH/g (ISO 3682) ;
- Un extrait sec de 99,1 % (ISO 3251) ;
- Une viscosité de 116 poises à 20°C ou 83 poises à 25°C (ISO 3219 :1993) ;
- Une longueur en huile de 44% ;
- Une fonctionnalité effective de 1,50.

### 2- Exemple 2 :

Dans un réacteur de 2 litres équipé d'un agitateur mécanique, d'une sonde de température, d'une arrivée d'azote, d'un décanteur surmonté d'un réfrigérant et d'une prise d'échantillon, on introduit à température ambiante :
- 916,50 g d'acide gras de soja ;
- 238,96 g d'isosorbide ;
- 358,44 g d'acide adipique ;
- 222,47 g de pentaérythritol ;
- 63,63 g de xylène.

La température du milieu réactionnel est ensuite élevée progressivement jusqu'à 220°C sous flux d'azote. Cette température est maintenue pendant 8 heures jusqu'à atteindre un indice d'acide inférieur à 20 mg KOH/gramme de résine. En fin de réaction, le xylène est ensuite éliminé par distillation sous vide jusqu'à atteindre un extrait sec supérieur ou égal à 99%. Il est alors obtenu une résine alkyde se présentant sous la forme d'un liquide visqueux.

Les caractéristiques de la résine alkyde non diluée obtenue (désignée sous le terme de résine alkyde A) sont :
- Un indice d'acide de 10,5 mg KOH/g (ISO 3682) ;
- Un extrait sec de 99% (ISO 3251) ;
- Une viscosité de 340 poises à 20°C (ISO 3219 :1993) ;
- Une longueur en huile de 58% ;
- Une fonctionnalité effective de 1,82.

Le tableau 1 ci-dessous décrit les proportions (grammes) des différents composants entrant dans la synthèse de sept exemples de résine alkyde selon l'invention.

Pour la synthèse des exemples 3 à 9, les différents composants indiqués dans la tableau 1 ont été incorporés dans un réacteur de volume déterminé, apte à recevoir l'ensemble des composants de départ, équipé d'un agitateur mécanique, d'une sonde de température, d'une arrivée d'azote, d'un décanteur surmonté d'un réfrigérant et d'une prise d'échantillon. La température du milieu réactionnel est ensuite élevée progressivement jusqu'à 220°C sous flux d'azote. Cette température est maintenue pendant 6 heures jusqu'à atteindre un indice d'acide inférieur à 20 mg KOH/gramme de résine. En fin de réaction, le xylène est ensuite éliminé par distillation sous vide jusqu'à atteindre un extrait sec supérieur ou égal à 99%. En fin de réaction, nous obtenons une résine alkyde se présentant sous la forme d'un liquide visqueux. Les indices d'acide, les viscosités et les extraits secs obtenus pour les exemples 3 à 9 sont indiqués en bas du tableau 1.

**Tableau 1**

| Résine alkyde selon invention | Exemple 3 | Exemple 4 | Exemple 5 | Exemple 6 | Exemple 7 | Exemple 8 | Exemple 9 |
|---|---|---|---|---|---|---|---|
| Masse (g) acide adipique | 0 | 358,44 | 250,64 | 280,62 | 0 | 0 | 282,74 |
| Masse (g) acide gras de soja | 161,54 | 916,5 | 640,92 | 1076,4 | 753,63 | 430,88 | 0 |
| Masse (g) acide gras de lin | 0 | 0 | 0 | 0 | 0 | 0 | 774,62 |
| Masse (g) dimère d'acide gras | 164,18 | 0 | 0 | 0 | 765,74 | 525,37 | 0 |
| Masse (g) isosorbide | 21,08 | 238,96 | 167,1 | 187,02 | 98,28 | 89,87 | 201,95 |
| Masse (g) pentaérythrite | 39,24 | 222,47 | 0 | 174,24 | 0 | 83,71 | 188,12 |
| Masse (g) glycérine | 0 | 0 | 105,29 | 0 | 123,85 | 28,31 | 0 |
| Masse (g) xylène | 13,96 | 63,63 | 36,05 | 81,72 | 58,5 | 41,86 | 52,56 |
| indice acide final (mg KOH/g) | 9,5 | 10,5 | 17 | 12 | 13 | 11 | 14 |
| viscosité (20 °C, Poises) | 116 | 340 | 20 | 24 | 27 | 123 | 31 |
| extrait-sec (%) | 99,1 | 99 | 99 | 99 | 99 | 98 | 98 |

### II- Evaluation de la résine alkyde A obtenue à l'issue de l'exemple 2.

La résine alkyde fabriquée à partir d'isosorbide et d'acide adipique a été dispersée dans le white spirit afin de la tester dans un premier temps dans une peinture glycero en phase solvant du marché (Synolac 6865 / Leaderlaque blanc (1008614) désignée sous le terme de formule témoin), avec les mêmes additifs et ce dans les mêmes proportions (pigments, charges,...) décrits dans le tableau 2 ci-après.

Les caractéristiques de la résine alkyde A diluée sont les suivantes :
Extrait sec: 70%±2 - viscosité : 1900 ±400 mPa s - longueur d'huile : 58% - densité : 0.94 ± 0.02.

**Tableau 2 :**

| Matières Premières | Peinture témoin (Synolac 6865/Leader Laque Blanc) | Peinture Alkyde A diluée biosourcée |
|---|---|---|
| % en poids du poids total de la peinture | | |
| Solvant White Spirit | 27.4 % | 27.4 % |
| Agent mouillant | 0.45 % | 0.45 % |
| Agent épaississant | 0.5 % | 0.5 % |
| Titane | 30 % | 30 % |
| Charges | 7.3 % | 7.3 % |
| SYNOLAC 6865 | 32.5 % | / |
| ALKYDE A DILUEE | / | 32.5 % |
| Agent anti-peau | 0.3 % | 0.3 % |
| Agent Siccatif | 1.55 % | 1.55 % |

**Les résultats des tests effectués figurent dans le tableau 3 ci-dessous :**

| Caractéristiques | Normes | tolérance | Formule témoin (Synolac 6865) | Résine alkyde A |
|---|---|---|---|---|
| Densité | NF EN ISO 2811-1 | 1,28/1,34 | 1,31 | 1,28 |
| Dureté persoz (7j) | NF EN ISO 1522 | | 62 s | 53 s |
| Dureté persoz(21j) | NF EN ISO 1522 | | 80 s | 57 s |
| Finesse | NF EN ISO 1524 | >8 | 8,5 | 8,5 |
| Visco ku | NF EN ISO 2884-1 | 110/120 ku | 105 ku | 106 ku |
| Coulure | 410MDT020 | >150µm | 200µm | >300µm |
| Brillant 60° | NFT 30-064 | >80% | 87% | 82,50% |
| Sédimentation | 410MDT038 | ok | Ok | ok |
| Séchage HP | NF EN ISO 3678 | <7h | 7h | 9h |
| Séchage HT | NF EN ISO 3678 | <7h | 11h | 12h |
| Adhérence sur bois | NF EN ISO 2409 | | Classe 1 | Classe 0 |
| Abrasion humide* 5000 cyles | NF EN ISO 11998 | | 4,03 g/m² 1,90 µm | 3,90 g/m² 1,80 µm |
| Teinte (écart au standard) | | | Référence | ΔE=0,35 |
| | | | | ΔL=-0,06 |
| | | | | Δa=-0,16 Δb=0,24 |
| Applicabilité | | | RAS | Tendance au cordage |
| QUV 100h | NF EN ISO 11507 | | ΔE=2,70 perte brillance 60% | ΔE=1,70 perte brillance 56% |
| QUV 250h | NF EN ISO 11507 | | ΔE=2,70 perte brillance 60% | ΔE=1,70 perte brillance 56% |

La peinture à base de résine alkyde A présente des performances similaires à celles obtenues avec la formule standard en termes de rapidité de séchage, d'adhérence, de résistance à l'abrasion humide et de tenue lumière. On note cependant une dureté Persoz plus faible après 3 semaines de séchage.

### III- Mise en émulsion de la résine alkyde A

La résine alkyde A est tout d'abord mélangée sous agitation (notamment à une vitesse de l'ordre de 4 000 tours/min) à l'aide d'un ultra-turrax avec le SPAN 80® à une température supérieure ou égale à 40°C, en particulier de l'ordre de 60°C pour former un mélange A. Dans un bol inox, de l'eau est mélangée avec l'agent anti-mousse TWEEN® 80 pendant au moins une minute, sous agitation (environ à 4 000 tours/min), puis l'agent stabilisant TACKIDEX® 110UY est ajouté pour la formation du mélange B.

Le mélange A est incorporé dans le mélange B, sous agitation, en maitrisant la température, en particulier en conservant une température supérieure ou égale à 40°C, notamment de l'ordre de 60°C. L'agitation du mélange est portée à 6 400 tours/min, puis agité 30 secondes à la vitesse de 10 000 tours/min pour revenir à 6 400 tours/min.

Les produits utilisés pour la préparation de l'émulsion décrite ci-dessus sont
- La résine alkyde masse obtenue à l'issue de l'exemple 2,
- L'eau de ville
- Un agent stabilisant : amidon modifié TACKIDEX® 110UY
- Un agent anti-mousse : Monolaurate de sorbitan polyoxyéthyléné TWEEN® 80
- Un agent émulsifiant : Monolaurate de sorbitan SPAN 80®
Formulation de l'émulsion en % en poids par rapport au poids total de l'émulsion,

**tableau 4 :**

| | |
|---|---|
| Eau | 50 % |
| Tackidex 110UY | 2,5 % |
| Réside alkyde (exemple 2) | 45 % |
| Tween 80 | 1 % |
| Span 80 | 0,5 % |
| TOTAL | 100 % |

L'émulsion ainsi obtenue est alors centrifugée au moyen d'une centrifugeuse (4000 tr/min) pendant 5 minutes. A la fin du test, il n'est pas observé de déphasage de ladite émulsion, ce qui signifie que l'émulsion formée est stable.

### IV- Evaluation de la résine alkyde A mise en émulsion conformément au procédé décrit au paragraphe III.

### 1- Comparativement à une émulsion aqueuse non biosourcée disponible sur le marché (URADIL AZ 60®)

L'émulsion aqueuse de la résine alkyde A, émulsionnée selon le procédé décrit ci-dessus au paragraphe III, a été comparée à une émulsion aqueuse d'une peinture non biosourcée standard (également à base d'une résine alkyde) destinée à revêtir le bois ou le fer (commercialisée sous la marque URADIL AZ 760® par DSM®). Les peintures à base d'URADIL AZ 760 et de l'émulsion de la résine alkyde A comprennent les mêmes formulations en termes de nature et de proportions des additifs (charges, pigments,...) décrites ci-après au tableau 4.

**Tableau 5 :**

| Matières Premières % en poids du poids total de la peinture | Peinture témoin non biosourcée | Peinture Emulsion Alkyde A biosourcée |
|---|---|---|
| Eau | 28.9 % | 28.9 % |
| Agent mouillant | 1 % | 1 % |
| Agent épaississant | 2.8 % | 2.8 % |
| Agent antimousse | 0.4 % | 0.4 % |
| Titane | 20 % | 20 % |
| Charges | 1.5 % | 1.5 % |
| URADIL AZ 760 | 44 % | / |
| EMULSION ALKYDE A BIOSOURCEE | / | 44 % |
| Agent étalement | 0.5 % | 0.5 % |
| Siccatif | 0.5 % | 0.5 % |
| Agent conservateur | 0.2 % | 0.2 % |
| Agent antiflash rusting | 0.2 % | 0.2 % |

**Les résultats figurent dans le tableau 6 ci-dessous :**

| Caractéristiques | normes | tolérances | URADIL AZ 760 | Emulsion aqueuse de la résine alkyde A |
|---|---|---|---|---|
| Densité | NF EN ISO 2811-1 | 1,20/1,26 | 1,24 | 1,25 |
| Dureté persoz(48h) | NF EN ISO 1522 | | 54 s | 56 s |
| Finesse | NF EN ISO 1524 | 8/10 | 8 | 8 |
| Visco ku | NF EN ISO 2884-1 | 130/135 ku | 115 ku | 107 ku |
| Ph | NF EN ISO 787-9 | 7/8 | 7,9 | 7,5 |
| Coulure | 410MDT020 | >200µm | 200µm | 250µm |
| Teinte L | | | 95,78 | 94,81 |
| A | | | -0,88 | -1,11 |
| B | | | 2,15 | 3,33 |
| Stabilité/sédimentation | | | conforme | Conforme |
| Epaisseur (sec) | | | 70µm | 70µm |
| Séchage HT | NF EN ISO 3678 | <10h | 5h | 8h |
| Adhérence sur bois | NF EN ISO 2409 | Classe 0/1 | Classe 0 | Classe 0 |
| Adhérence sur acier | NF EN ISO 2409 | Classe 0/1 | Classe 3 | Classe 1 |
| Abrasion humide | NF EN ISO 11998 | <20µm | 0,5µm | 14µm |

Les résultats obtenus à partir de l'émulsion de la résine alkyde A sont intéressants. En effet, cette dernière est stable, il n'est pas constaté d'évolution de la viscosité ni de déphasage de la peinture.

Les caractéristiques du film obtenu sont conformes en termes de séchage et d'adhérence (sur acier et bois), ainsi qu'au niveau de la résistance à l'abrasion humide.

### 2- Comparativement à une émulsion aqueuse biosourcée disponible sur le marché GEOPUR MAT® (commercialisé par CAMI-GMC).

L'émulsion aqueuse de la résine alkyde A, émulsionnée selon le procédé décrit ci-dessus au paragraphe III, a été comparée à une émulsion aqueuse d'une peinture biosourcée standard (également à base d'une résine alkyde : GEOPUR MAT). Les peintures à base de GEOPUR MAT et de l'émulsion de la résine alkyde A comprennent les mêmes formulations en termes de nature et de proportions des additifs (charges, pigments,...) décrites ci-après au tableau 6.

**Tableau 7 :**

| Matières Premières | Peinture témoin Biosourcée GEOPUR MAT | Peinture Emulsion Alkyde A biosourcée |
|---|---|---|
| Eau | 25.55 % | 25.55 % |
| Agent mouillant | 1 % | 1 % |
| Agent épaississant | 3.35 % | 3.35 % |
| Agent antimousse | 1 % | 1 % |
| Titane | 20 % | 20 % |
| Charges | 27.5 % | 27.5 % |
| EMULSION BIOSOURCEE GEOPUR MAT | 20 % | / |
| EMULSION ALKYDE A BIOSOURCEE | / | 20 % |
| Cosolvant | 1 % | 1 % |
| Agent Siccatif | 0.5 % | 0.5 % |
| Agent conservateur | 0.1 % | 0.1 % |

**Les résultats figurent dans le tableau 8 ci-dessous :**

| Caractéristiques | normes | GEOPUR MAT | Emulsion aqueuse de la résine alkyde A |
|---|---|---|---|
| Densité | NF EN ISO 2811-1 | 1,53 | 1,36 |
| Dureté persoz (7 jours) | NF EN ISO 1522 | 36 s | 47 s |
| Finesse | NF EN ISO 1524 | 8 | 8 |
| Visco ku | NF EN ISO 2884-1 | 133 ku | 117 ku |
| Coulure | 410MDT020 | 500µm | 450µm |
| Brillant 60° | NFT 30-064 | 2,30% | 2,20% |
| Sédimentation 1 mois 20 °C | 410MDT038 | ok | ok |
| Séchage HP | NF EN ISO 3678 | 30 mn | 30 mn |
| Séchage HT | NF EN ISO 3678 | 30 mn | 30 mn |
| Adhérence sur bois | NF EN ISO 2409 | Classe 5 | Classe 1 |
| Epaisseur appliquée | | 70 µm | 70 µm |
| Abrasion humide | NF EN ISO 11998 | Disparition peinture | 82 g/m² 50 µm |

Par rapport à la peinture biosourcée du marché GEOPUR MAT, la formule biosourcée selon l'invention présente une meilleure tenue à l'abrasion humide malgré une forte dégradation du film après 5000 cycles à la brosse dure, ainsi qu'une meilleure adhérence sur bois. On observe en effet que le film de peinture témoin GEOPUR a totalement disparu à l'issue du test d'abrasion humide alors que le film obtenu avec la résine alkyde A selon l'invention est encore présent à l'issue du test.

Les autres caractéristiques sont sensiblement identiques à celles du GEOPUR.

En conclusion, la résine alkyde selon l'invention présente des propriétés améliorées lui permettant notamment d'être formulée dans une peinture et de satisfaire le cahier des charges, notamment concernant la rapidité de séchage, la dureté du film formé, la résistance à l'abrasion humide, la stabilité rhéologique et physique de la peinture, la résistance aux rayons ultra-violets ou encore sa capacité à adhérer à différents supports notamment le bois et le métal comparables voire supérieures à celles obtenues pour une formulation de peinture à base d'une résine alkyde solvantée.

## Revendications

1. Résine alkyde, comprenant :
- un composant polyacide, de préférence biosourcé, ou son anhydride acide, de préférence biosourcé;
- un premier composant polyol, de préférence biosourcé, ayant au moins deux groupes hydroxyles ;
- un deuxième composant polyol biosourcé ayant au moins un motif de 1,4 :3,6-dianhydrohexitol ; et
- un composant à base d'huile biosourcée ou son acide gras correspondant biosourcé,
ladite résine comprenant moins de 10% en moles, par rapport au nombre total de moles des différents composants, de polyacide(s) aromatique(s), de polyacide(s) cycloalkyle(s) ou d'anhydride(s) acide(s) desdits polyacides.

2. Résine alkyde selon la revendication 1, **caractérisée en ce que** ledit au moins un motif de 1,4 :3,6-dianhydrohexitol est choisi, seul ou en combinaison, parmi : le 1,4 :3,6-dianhydro-D-sorbitol (isosorbide), le 1,4 :3,6-dianhydro-D-mannitol (isomannide), et le 1,4 :3,6-dianhydro-L-iditol (isoidide), de préférence le 1,4 :3,6-dianhydro-D-sorbitol (isosorbide).

3. Résine alkyde selon l'une ou l'autre des revendications 1 et 2, **caractérisée en ce que** les motifs de 1,4 :3,6-dianhydrohexitol du deuxième composant polyol représente au moins 5 % en moles de ladite résine alkyde.

4. Résine alkyde selon l'une quelconque des revendications 1 à 3, **caractérisée en ce que** le composant polyacide est choisi, seul ou en combinaison, parmi : l'acide succinique (C₄H₆O₄) ; l'acide adipique (CₑH₁₀O₄) ; l'acide itaconique (C₅H₆O₄), l'acide azélaique, l'acide sébacique, l'acide tartrique, l'acide citrique, l'acide malique, et leurs anhydrides acides et/ou leurs mélanges ; des oligomères d'acide gras d'origine végétale et notamment un dimère ou un trimère d'acide gras d'origine végétal.

5. Résine alkyde selon l'une quelconque des revendications 1 à 4, **caractérisée en ce que** le premier composant polyol est choisi parmi les polyols suivants, seul ou en combinaison : le pentaérythritol (C₅H₁₂O₄) ; le glycérol (C₃H₈O₃) ; le sorbitol (C₆H₁₄O₆) ; l'erythritol (C₄H₁₀O₄), avantageusement le pentaérythritol (C₅H₁₂O₄) et le le glycérol (C₃H₈O₃).

6. Résine alkyde selon l'une quelconque des revendications 1 à 5, **caractérisée en ce que** le composant à base d'huile biosourcée ou son acide gras correspondant est choisi parmi les huiles ou acides gras de Soja, les huiles ou acides gras de Tournesol, les huiles ou acides gras de Lin, les huiles ou acides gras de bois de Chine, les huiles ou acides gras de Ricin, l'acide gras de Tall-Oil et/ou leurs mélanges, de préférence parmi les acides précités.

7. Résine alkyde selon l'une quelconque des revendications 1 à 6, **caractérisée en ce qu'**elle présente un indice d'acide inférieur à 20 mg KOH/g, de préférence inférieur ou égal à 15 mg KOH/g.

8. Résine alkyde selon l'une quelconque des revendications 1 à 7, **caractérisée en ce qu'**elle présente une longueur en huile comprise entre 25 et 75% inclus, de préférence entre 40% et 65% inclus.

9. Composition comprenant une résine alkyde selon l'une quelconque des revendications 1 à 8, et un diluant réactif, de préférence biosourcé.

10. Emulsion aqueuse d'une résine alkyde comprenant de 25% à 60% en poids de résine alkyde selon l'une quelconque des revendications 1 à 8 ou de la composition à la revendication 9, et au moins un agent émulsifiant, de préférence d'origine végétale et/ou animale, de préférence en quantité allant de 0,1% en poids à 1% en poids de l'émulsion aqueuse.

11. Formulation de peinture comprenant une composition selon la revendication 9 ou une émulsion aqueuse selon la revendication 10 ou une résine alkyde selon l'une quelconque des revendications 1 à 8.

12. Procédé de préparation d'une résine alkyde, selon l'une quelconque des revendications 1 à 8, comprenant une étape de polycondensation de composants de départ formant un milieu réactionnel comprenant au moins un composant polyacide, de préférence biosourcé, ou son anhydride acide, de préférence biosourcé, un premier composant polyol, de préférence biosourcé, ayant au moins deux groupes hydroxyles, un deuxième composant polyol comprenant au moins un motif de 1,4 :3,6-dianhydrohexitol , un composant à base d'huile biosourcée ou son acide gras correspondant biosourcé, lesdits composants de départ sont mélangés dynamiquement en continu à une température comprise entre 180°C et 240°C jusqu'à formation de la résine alkyde,
le milieu réactionnel comprenant moins de 10% en moles par rapport au nombre total des moles des composants de départ, de polyacide(s) aromatique(s), de polyacide(s) cycloalkyle(s) ou d'anhydride(s) acide(s) desdits polyacides.

13. Procédé de préparation selon la revendication 12, dans lequel la température du milieu réactionnel lors de l'étape de polycondensation est maintenue pendant au moins deux heures entre 180°C et 240°C jusqu'à atteindre un indice d'acide inférieur à 20 mg KOH/g de résine alkyde.

14. Procédé de préparation d'une émulsion aqueuse de la résine alkyde selon l'une quelconque des revendications 1 à 8 ou de l'émulsion selon la revendication 10, comprenant les étapes successives suivantes :
- une première étape au cours de laquelle, ladite résine alkyde est chauffée à une température supérieure ou égale à 40 °C, de préférence inférieure ou égale à 90°C pour former un mélange A, sous agitation, éventuellement avec un agent émulsifiant ;
- une seconde étape au cours de laquelle, un agent stabilisant est mélangé avec de l'eau, et éventuellement avec un agent anti-mousse, en chauffant à une température supérieure ou égale à 40°C, de préférence inférieure ou égale à 90°C pour former un mélange B ;
- une troisième étape au-cours de laquelle on incorpore dans ledit mélange B, sous forte agitation, notamment à l'aide d'un dispositif comportant une pâle d'agitation tournant entre 5 000 tr/min et 8 000 tr/min, ledit mélange A, de préférence la température des mélanges A et B est inférieure ou égale à 60 °C, pendant au moins une minute pour l'obtention de l'émulsion de ladite résine alkyde.

## Patentansprüche

1. Alkydharz, umfassend:
- eine Polysäure-Komponente, vorzugsweise biobasiert, oder deren Säureanhydrid, vorzugsweise biobasiert,
- eine erste Polyol-Komponente, vorzugsweise biobasiert, mit wenigstens zwei Hydroxylgruppen,
- eine zweite biobasierte Polyol-Komponente mit wenigstens einer Einheit von 1,4 :3,6-Dianhydrohexitol, und
- eine Komponente auf Basis von biobasiertem Öl oder seiner entsprechenden biobasierten Fettsäure,
wobei das Harz, bezogen auf die Gesamtmolzahl der verschiedenen Komponenten, weniger als 10 Mol-% von aromatischer (aromatischen) Polysäure(n), von Cycloalkyl-Polysäure(n) oder von Säureanhydrid(en) der Polysäuren umfasst.

2. Alkydharz nach Anspruch 1, **dadurch gekennzeichnet, dass** die wenigstens eine Einheit von 1,4 :3,6-Dianhydrohexitol ausgewählt ist, allein oder in Kombination, aus: 1,4:3,6-Dianhydro-D-sorbitol (Isosorbid), 1,4:3,6-Dianhydro-D-mannitol (Isomannid) und 1,4 :3,6-Dianhydro-L-iditol (Isoidid), vorzugsweise 1,4 :3,6-Dianhydro-D-sorbitol (Isosorbid).

3. Alkydharz nach dem einen oder dem anderen der Ansprüche 1 und 2, **dadurch gekennzeichnet, dass** die Einheiten von 1,4 :3,6-Dianhydrohexitol der zweiten Polyol-Komponente wenigstens 5 Mol-% des Alkydharzes ausmachen.

4. Alkydharz nach einem der Ansprüche 1 bis 3, **dadurch gekennzeichnet, dass** die Polysäure-Komponente ausgewählt ist, allein oder in Kombination, aus: Bernsteinsäure (C₄H₆O₄), Adipinsäure (C₆H₁₀O₄), Itaconsäure (C₅H₆O₄), Azelainsäure, Sebacinsäure, Weinsäure, Zitronensäure, Apfelsäure und ihren Säureanhydriden und/oder ihren Mischungen, Oligomeren von Fettsäure pflanzlichen Ursprungs und insbesondere einem Dimer oder einem Trimer von Fettsäure pflanzlichen Ursprungs.

5. Alkydharz nach einem der Ansprüche 1 bis 4, **dadurch gekennzeichnet, dass** die erste Polyol-Komponente aus den folgenden Polyolen, allein oder in Kombination, ausgewählt ist: Pentaerythritol (C₅H₁₂O₄), Glycerin (C₃H₈O₃), Sorbitol (C₆H₁₄O₆), Erythritol (C₄H₁₀O₄), vorteilhafterweise Pentaerythritol (C₅H₁₂O₄) und Glycerin (C₃H₈O₃).

6. Alkydharz nach einem der Ansprüche 1 bis 5, **dadurch gekennzeichnet, dass** die Komponente auf Basis von biobasiertem Öl oder seiner entsprechenden Fettsäure aus den Sojaölen oder -fettsäuren, den Sonnenblumenölen oder -fettsäuren, den Leinölen oder -fettsäuren, den Tungölen oder -fettsäuren, den Rizinusölen oder - fettsäuren, der Tallöl-Fettsäure und/oder ihren Mischungen, vorzugsweise aus den vorgenannten Säuren.

7. Alkydharz nach einem der Ansprüche 1 bis 6, **dadurch gekennzeichnet, dass** es eine Säurezahl von weniger als 20 mg KOH/g, vorzugsweise weniger als oder gleich 15 mg KOH/g aufweist.

8. Alkydharz nach einem der Ansprüche 1 bis 7, **dadurch gekennzeichnet, dass** es eine Öllänge zwischen 25 und einschließlich 75 %, vorzugsweise zwischen 40 % und einschließlich 65 % aufweist.

9. Zusammensetzung, umfassend ein Alkydharz nach einem der Ansprüche 1 bis 8 und ein vorzugsweise biobasiertes reaktives Verdünnungsmittel.

10. Wässrige Emulsion eines Alkydharzes, umfassend 25 bis 60 Gew.-% Alkydharz nach einem der Ansprüche 1 bis 8 oder der Zusammensetzung in Anspruch 9 und wenigstens einen Emulgator, vorzugsweise pflanzlichen und/oder tierischen Ursprungs, vorzugsweise in einer Menge im Bereich von 0,1 Gew.-% bis 1 Gew.-% der wässrigen Emulsion.

11. Anstrichformulierung, umfassend eine Zusammensetzung nach Anspruch 9 oder eine wässrige Emulsion nach Anspruch 10 oder ein Alkydharz nach einem der Ansprüche 1 bis 8.

12. Verfahren zur Herstellung eines Alkydharzes nach einem der Ansprüche 1 bis 8, umfassend einen Schritt zur Polykondensation von Ausgangskomponenten, die ein Reaktionsmedium bilden, das wenigstens eine vorzugsweise biobasierte Polysäure-Komponente, oder deren vorzugsweise biobasiertes Säureanhydrid, eine erste vorzugsweise biobasierte Polyol-Komponente mit wenigstens zwei Hydroxylgruppen, eine zweite Polyol-Komponente mit wenigstens einer Einheit von 1,4:3,6-Dianhydrohexitol, eine Komponente auf Basis von biobasiertem Öl oder seiner entsprechenden biobasierten Fettsäure umfasst, wobei die Ausgangskomponenten bei einer Temperatur im Bereich zwischen 180 °C und 240 °C bis zur Bildung des Alkydharzes kontinuierlich dynamisch gemischt werden,
wobei das Reaktionsmedium, bezogen auf die Gesamtmolzahl der Ausgangskomponenten, weniger als 10 Mol-% von aromatischer (aromatischen) Polysäure(n), von Cycloalkyl-Polysäure(n) oder von Säureanhydrid(en) der Polysäuren umfasst.

13. Herstellungsverfahren nach Anspruch 12, wobei die Temperatur des Reaktionsmediums während des Polykondensationsschrittes für wenigstens zwei Stunden zwischen 180 °C und 240 °C gehalten wird, bis eine Säurezahl von weniger als 20 mg KOH/g Alkydharz erreicht ist.

14. Verfahren zur Herstellung einer wässrigen Emulsion des Alkydharzes nach einem der Ansprüche 1 bis 8 oder der Emulsion nach Anspruch 10, umfassend die folgenden aufeinanderfolgenden Schritte:
- einen ersten Schritt, im Laufe dessen das Alkydharz auf eine Temperatur von über oder gleich 40 °C, vorzugsweise unter oder gleich 90 °C erhitzt wird, um ein Gemisch A unter Rühren, gegebenenfalls mit einem Emulgator, zu bilden,
- einen zweiten Schritt, im Laufe dessen ein Stabilisierungsmittel mit Wasser und eventuell mit einem Antischaummittel, unter Erhitzen auf eine Temperatur von über oder gleich 40 °C, vorzugsweise unter oder gleich 90 °C, gemischt wird, um ein Gemisch B zu bilden,
- einen dritten Schritt, im Laufe dessen das Gemisch A unter kräftigem Rühren, insbesondere mit Hilfe einer Vorrichtung, die eine mit 5000 U/Min. bis 8000 U/Min. umlaufende Rührschaufel umfasst, in das Gemisch B eingebracht wird, vorzugsweise beträgt die Temperatur der Gemische A und B weniger als oder gleich 60 °C, wenigstens für eine Minute, um die Emulsion des Alkydharzes zu erhalten.

## Claims

1. An alkyd resin, comprising:
- a polyacid component, preferably biosourced or its acid anhydride, preferably biosourced;
- a first polyol component, preferably biosourced, having at least two hydroxyl groups;
- a second biosourced polyol component having at least one 1,4:3,6-dianhydrohexitol unit; and
- a component based on biosourced oil or its biosourced corresponding fatty acid,
- said resin comprising less than 10% by moles, based on the total number of moles of the different components, of aromatic polyacid(s), cycloalkyl polyacid(s) or acid anhydride(s) of said polyacids.

2. The alkyd resin according to claim 1, **characterized in that** said at least one 1,4:3,6-dianhydrohexitol unit is selected, alone or as a combination, from: 1,4:3,6-dianhydro-D-sorbitol (isosorbide), 1,4:3,6-dianhydro-D-mannitol (isomannide), and 1,4:3,6-dianhydro-L-iditol (isoidide), preferably 1,4:3,6-dianhydro-D-sorbitol (isosorbide).

3. The alkyd resin according to any one of claims 1 to 2, **characterized in that** the 1,4:3,6-dianhydrohexitol units of the second polyol component account for at least 5% by moles of said alkyd resin.

4. The alkyd resin according to any one of claims 1 to 3, **characterized in that** the polyacid component is selected, alone or as a combination, from: succinic acid (C₄H₆O₄); adipic acid (C₆H₁₀O₄); itaconic acid (C₅H₆O₄), azelaic acid, sebacic acid, tartaric acid, citric acid, malic acid, and the acid anhydrides and/or their mixtures; oligomers of a fatty acid of plant origin and notably a dimer or trimer of a fatty acid of plant origin.

5. The alkyd resin according to any one of claims 1 to 4, **characterized in that** the first polyol component is selected from the following polyols, alone or as a combination: pentaerythritol (C₅H₁₂O₄); glycerol (C₃H₈O₃); sorbitol (C₆H₁₄O₆); erythritol (C₄H₁₀O₄), advantageously pentaerythritol (C₅H₁₂O₄) and glycerol (C₃H₈O₃).

6. The alkyd resin according to any one of claims 1 to 5, **characterized in that** the component based on biosourced oil or its corresponding fatty acid is selected from soyabean oils or fatty acids, sunflower oils or fatty acids, flax oils or fatty acids, tung oils or fatty acids, castor oils or fatty acids, tall oil fatty acids and/or mixtures thereof, preferably from the aforementioned acids.

7. The alkyd resin according to any one of claims 1 to 6, **characterized in that** it has an acid index of less than 20 mg KOH/g, preferably less than or equal to 15 mg KOH/g.

8. The alkyd resin according to any one of claims 1 to 7, **characterized in that** it has an oil length comprised between 25% and 75% inclusive, preferably between 40% and 65% inclusive.

9. A composition comprising an alkyd resin according to any one of claims 1 to 8, and a reactive diluent, preferably biosourced.

10. An aqueous emulsion of an alkyd resin comprising from 25% to 60% by weight of alkyd resin according to any one of claims 1 to 8 or of the composition according to claim 9, and at least one emulsifying agent, preferably of plant and/or animal origin, preferably in an amount ranging from 0.1% by weight to 1% by weight of the aqueous emulsion.

11. A paint formulation comprising a composition according to claim 9 or an aqueous emulsion according to 10 or an alkyd resin according to any one of claims 1 to 8.

12. A method for preparing an alkyd resin, according to any one of claims 1 to 8, comprising a step for polycondensation of starting components forming a reaction medium comprising at least one polyacid, preferably biosourced, component or its acid anhydride, preferably biosourced, one first polyol component, preferably biosourced, having at least 2 hydroxyl groups, a second polyol component comprising at least one 1,4:3,6-dianhydrohexitol unit, a component based on biosourced oil or its biosourced corresponding fatty acid, said starting components being dynamically mixed continuously at a temperature comprised between 180°C and 240°C until formation of the alkyd resin,
the reaction medium comprising less that 10% by moles, based on a total number of moles of the starting components, of aromatic polyacid(s), of cycloalkyl polyacid(s) or acid anhydride(s) of said polyacids.

13. The preparation method according to claim 12, wherein the temperature of the reaction medium during the polycondensation step is maintained for at least two hours between 180°C and 240°C until an acid index of less than 20 mg KOH/g of alkyd resin is attained.

14. The preparation method of an aqueous emulsion of the alkyd resin according to any one of claims 1 to 8 or of the emulsion according to claim 10, comprising the following steps:
- a first step during which said alkyd resin is heated to a temperature greater than or equal to 40°C, preferably less than or equal to 90°C in order to form a mixture A, with stirring, optionally with an emulsifying agent;
- a second step during which a stabilising agent is mixed with water and optionally with an anti-foam agent, by heating to a temperature greater than or equal to 40°C, preferably less than or equal to 90°C in order to form a mixture B;
- a third step during which said mixture A is incorporated in to said mixture B, with strong stirring, necessary by means of a device including a stirring blade rotating between 5,000 revolutions/min and 8,000 revolutions/min, preferably the temperature of the mixtures A and B is less than or equal to 60°C, for at least one minute in order to obtain the emulsion of said alkyd resin.
